# EUROPEAN PATENT APPLICATION

(11) **EP 4 365 733 A1**
(43) Date of publication of application: **08.05.2024**
(21) Application number: 22866695.4
(22) Date of filing: 08.09.2022
(51) Int. Cl.: G06F 9/448, G06F 9/451

(54) **MANAGEMENT SYSTEM, METHOD AND APPARATUS, AND DEVICE AND STORAGE MEDIUM**

(30) Priority: 10.09.2021 CN 202111059984
(71) Applicant: China Faw Co., Ltd., Changchun, Jilin 130011 (CN)
(72) Inventor: ZHENG, Hongli, Changchun, Jilin 130011 (CN); WU, Mingzhe, Changchun, Jilin 130011 (CN); LIU, Zhaoyang, Changchun, Jilin 130011 (CN); CAI, Xu, Changchun, Jilin 130011 (CN)
(74) Representative: Grassi, Stefano
(86) International application number: PCT/CN2022/117785
(87) International publication number: WO 2023/036234

(57) **Abstract**

Disclosed are a management system, a management method and apparatus, a device and a storage medium. The management system includes: a first manager (110), a second manager (120), a first input source (130), a second input source (140), a first executor (150) and a second executor (160), where the first input source (130) is connected to the first executor (150), the first input source (130) is connected to the first manager (110), the first manager (110) is connected to the second manager (120), the second manager (120) is connected to the second executor (160), and the second manager (120) is connected to the second input source (140).

## Description

### Cross-Reference to Related Application

The disclosure claims the priority to Chinese Patent Application No. 202111059984.7, filed with the Chinese Patent Office on September 10, 2021, which is incorporated herein in its entirety by reference.

### Technical Field

Examples of the disclosure relate to the technical field of vehicles, in particular to a management system, a management method and apparatus, a device and a storage medium.

### Background

As electronic devices develop and control terminals and display terminals increase, conflicts between control and display gradually arise and escalate.

Some conflicts can be solved through an interaction method in the related art, through which inputs and outputs are controlled by executable programs controlling an executor. However, an interaction mode (an execution policy and a display policy) is required to be developed correspondingly for every executable program. If the interaction mode is to be changed, corresponding programs are needed to be changed, and tested and verified again. After such change, upgrade of a wide range of applications is required, which is merely feasible in a specific state in numerous fields such as automobiles.

### Summary

Examples of the disclosure provide a management system, a management method and apparatus, a device and a storage medium, through which conflicts between control and display are solved, and a second executor can display a result firstly without waiting for an execution result of a first executor.

In a first aspect, the example of the disclosure provides a management system. The management system includes:
a first manager, a second manager, a first input source, a second input source, a first executor and a second executor, where the first input source is connected to the first executor, the first input source is connected to the first manager, the first manager is connected to the second manager, the second manager is connected to the second executor, and the second manager is connected to the second input source.

In a second aspect, the example of the disclosure provides a management method. The management method includes:
receiving first input information corresponding to a first input source and executing the first input information by a first executor;
obtaining the first input information by a first manager through the first input source;
determining a first target execution instruction by the first manager according to the first input information;
controlling, by the first manager, the first executor to execute the first target execution instruction;
determining a first predicted execution result according to the first target execution instruction and transmitting the first predicted execution result to a second manager by the first manager; and
transmitting the first predicted execution result to a second executor and causing the second executor to display the first predicted execution result by the second manager.

In a third aspect, the example of the disclosure provides a management method. The management method includes: obtaining second input information through a second input source and transmitting the second input information to a first manager by a second manager;
determining a second target execution instruction according to the second input information and controlling a first executor to execute the second target execution instruction by the first manager;
determining a second predicted execution result according to the second target execution instruction and transmitting the second predicted execution result to the second manager by the first manager; and
transmitting the second predicted execution result to a second executor and causing the second executor to display the second predicted execution result by the second manager.

In a fourth aspect, the example of the disclosure provides a management apparatus. The management apparatus includes: a first executor, a first manager and a second manager; where
the first executor includes: a reception module configured to receive first input information corresponding to a first input source, and execute the first input information;
the first manager includes: a first obtaining module, a first determination module, a control module and a first transmission module; where
the first obtaining module is configured to obtain the first input information through the first input source;
the first determination module is configured to determine a first target execution instruction according to the first input information;
the control module is configured to control the first executor to execute the first target execution instruction; and
the first transmission module is configured to determine a first predicted execution result according to the first target execution instruction, and transmit the first predicted execution result to the second manager; and
the second manager includes: a second transmission module configured to transmit the first predicted execution result to a second executor, and causes the second executor to display the first predicted execution result.

In a fifth aspect, the example of the disclosure provides a management apparatus. The management apparatus includes:
a second manager and a first manager; where
the second manager includes: a second obtaining module and a third transmission module; where
the second obtaining module is configured to obtain second input information through a second input source, and transmit the second input information to the first manager; and
the third transmission module is configured to transmit a second predicted execution result to a second executor, and cause the second executor to display the second predicted execution result; and
the first manager includes: a second determination module and a third determination module; where
the second determination module is configured to determine a second target execution instruction according to the second input information, and control a first executor to execute the second target execution instruction; and
the third determination module is configured to determine the second predicted execution result according to the second target execution instruction, and transmit the second predicted execution result to the second manager.

In a sixth aspect, the example of the disclosure provides an electronic device. The electronic device includes: a memory, a processor and a computer program that is stored on the memory and can be run on the processor, where the processor implements the management method according to any one of the examples of the disclosure when executing the program.

In a seventh aspect, the example of the disclosure provides a computer-readable storage medium storing a computer program, where the computer program implements the management method according to any one of the examples of the disclosure when executed by a processor.

### Brief Description of the Drawings

The accompanying drawings required in examples will be briefly described below. It should be understood that the following accompanying drawings merely show some examples of the disclosure. A person of ordinary skill in the art can still derive other relevant accompanying drawings from these accompanying drawings without creative efforts.
Fig. 1 is a schematic structural diagram of a management system according to an example of the disclosure;
Fig. 1a is a schematic structural diagram of another management system according to an example of the disclosure;
Fig. 2 is a flowchart of a management method according to an example of the disclosure;
Fig. 3 is a flowchart of another management method according to an example of the disclosure;
Fig. 4 is a schematic structural diagram of a management apparatus according to an example of the disclosure;
Fig. 5 is a schematic structural diagram of another management apparatus according to an example of the disclosure;
Fig. 6 is a schematic structural diagram of an electronic device according to an example of the disclosure; and
Fig. 7 is a schematic structural diagram of a computer-readable storage medium including a computer program according to an example of the disclosure.

### Detailed Description of the Embodiments

The disclosure will be described in detail below with reference to accompanying drawings and in conjunction with examples. It can be understood that the examples described herein are merely used to explain the disclosure. In addition, it should be noted that merely some rather than all of structures related to the disclosure are shown in the accompanying drawings for the convenience of description. In addition, the examples in the disclosure and features in the examples can be combined with one another if there is no conflict.

It should be noted that illustrative examples are described as processing or methods in the form of flowcharts. Although operations (or steps) in the flowcharts are described as sequential processing, many operations can be implemented in parallel, concurrently or simultaneously. In addition, the operations can be reordered. The processing can be terminated when its operations are completed, but can further include additional steps not included in the accompanying drawings. The processing can correspond to methods, functions, procedures, subroutines, subprograms, etc. In addition, the examples in the disclosure and features in the examples can be combined with one another if there is no conflict.

As used in the disclosure, the term "comprise" or "include" and its variants indicate open-ended including, that is, "including but not limited to". The term "based on" indicates "at least partially based on". The term "one example" indicates "at least one example".

It should be noted that since similar reference numerals and letters indicate similar items in the following accompanying drawings, once defined in one accompanying drawing, an item does not need to be defined and explained in subsequent accompanying drawings. In addition, in the description of the disclosure, the terms "first", "second", etc. are merely used for distinguishing description and cannot be understood as indicating or implying relative importance.

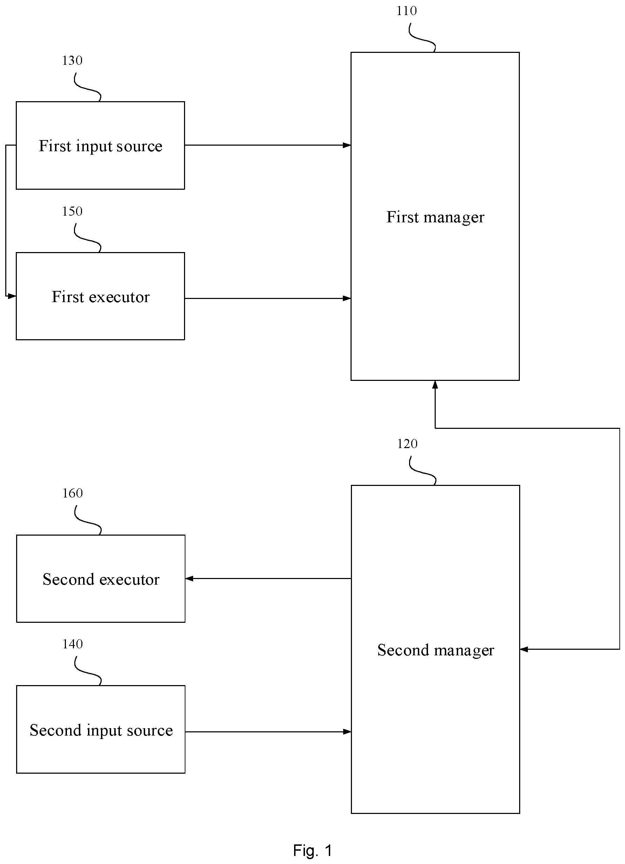

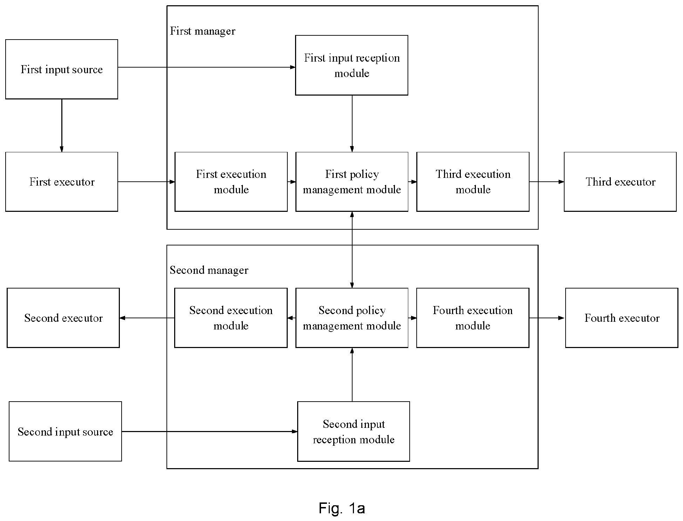

Fig. 1 is a schematic structural diagram of a management system according to an example of the disclosure. This example may be applied to the case where a first executor, a second executor, a first input source and a second input source are managed. The apparatus may be implemented through software and/or hardware. The apparatus may be integrated in any device providing management functions. As shown in Fig. 1, the management system includes: a first manager 110, a second manager 120, a first input source 130, a second input source 140, a first executor 150 and a second executor 160.

In this example, the first input source is connected to the first executor, the first input source is connected to the first manager, the first manager is connected to the second manager, the second manager is connected to the second executor, and the second manager is connected to the second input source.

Alternatively, the management system further includes: a third executor, and the third executor is connected to the first manager.

Alternatively, the management system further includes: a fourth executor, and the fourth executor is connected to the second manager.

Alternatively, the first manager includes: a first input reception module, a first policy management module and a first execution module. The first input reception module is connected to the first input source, the first policy management module is connected to the first input reception module, and the first execution module is connected to the first policy management module.

Alternatively, the second manager includes: a second input reception module, a second policy management module and a second execution module. The second input reception module is connected to the second input source, the second policy management module is connected to the second input reception module, and the second execution module is connected to the second policy management module.

In an example, as shown in Fig. la, a management system includes a first manager, a second manager, a first input source, a second input source, a first executor, a second executor, a third executor and a fourth executor. The first input source is connected to the first executor, the first input source is connected to the first manager, and the first manager is connected to the second manager. The second manager is connected to the second executor, and the second manager is connected to the second input source. The third executor is connected to the first manager, and the fourth executor is connected to the second manager. The first manager includes: a first input reception module, a first policy management module and a first execution module. The first input reception module is connected to the first input source, the first policy management module is connected to the first input reception module, and the first execution module is connected to the first policy management module. The second manager includes: a second input reception module, a second policy management module and a second execution module. The second input reception module is connected to the second input source, the second policy management module is connected to the second input reception module, and the second execution module is connected to the second policy management module.

This example provides the management system. The management system includes: the first manager, the second manager, the first input source, the second input source, the first executor and the second executor. The first input source is connected to the first executor, the first input source is connected to the first manager and the first manager is connected to the second manager. The second manager is connected to the second executor, and the second manager is connected to the second input source, receives first input information corresponding to the first input source through the first executor, and executes the first input information. The first manager obtains the first input information through the first input source. The first manager determines a first target execution instruction according to the first input information. The first manager controls the first executor to execute the first target execution instruction. The first manager determines a first predicted execution result according to the first target execution instruction, and transmits the first predicted execution result to the second manager. The second manager transmits the first predicted execution result to the second executor, and causes the second executor to display the first predicted execution result. Alternatively, the second manager obtains second input information through the second input source, and transmits the second input information to the first manager. The first manager determines a second target execution instruction according to the second input information, and controls the first executor to execute the second target execution instruction. The first manager determines a second predicted execution result according to the second target execution instruction, and transmits the second predicted execution result to the second manager. The second manager transmits the second predicted execution result to the second executor, and causes the second executor to display the second predicted execution result, such that a conflict between control and display is solved, and the second executor can display a display result firstly without waiting for the execution result of the first executor.

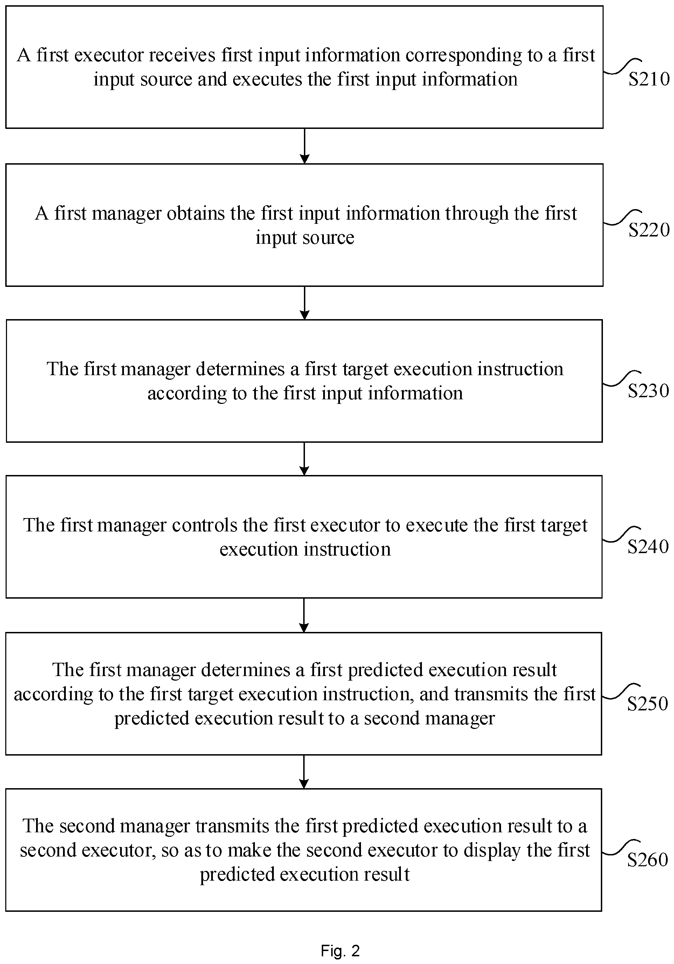

Fig. 2 is a flowchart of a management method according to an example of the disclosure. This example may be applied to the case where a first executor, a second executor, a first input source and a second input source are managed. The method may be executed by the management apparatus according to the example of the disclosure. The apparatus may be implemented through software and/or hardware. As shown in Fig. 2, the method includes:
S210. A first executor receives first input information corresponding to a first input source and executes the first input information.

In this example, the first input information is input from the first input source. The first input source may be a variety of input devices including screen inputs, voice inputs and camera inputs of controllers of an infotainment system and an air conditioning system; hard buttons, buttons or smart surface buttons of a steering wheel, an air conditioner, a window, etc.; external connected devices: a mobile phone, a tablet computer, etc. connected to the infotainment system through an universal serial bus (USB) or WIFL Bluetooth, a peripheral device connected to a whole vehicle through a whole vehicle network connection (a controller area network (CAN), network, Ethernet, etc.), other types of normal controllers, sensors, etc. connected through hard-wired input/output (I/O), and a cloud server, etc. connected to the whole vehicle through on-board Ethernet; and built-in applications: a whole vehicle controller that provides navigation and positioning information, and Cloud that transmits road information and other navigation information, weather information, smart city information, etc. transmitted to a local side.

In this example, the first input information includes at least one of the following: data input by a user and instructions input by the user, by, for example, clicking a button of the air conditioner by the user.

In this example, the first executor is a display and execution terminal. The first executor includes: an infotainment system display screen including an instrument screen, a console, a passenger seat screen, a rear seat screen, etc.; an onboard air conditioner, a head-up display (HUD), a circumferential reversing camera, transparent A-pillar, a streaming rearview mirror, an event data recorder, etc.; voice feedback information; whole vehicle prompt information or sound, etc.; status lights of the hard buttons, buttons or smart surface buttons of the steering wheel, the air conditioner and the window; and controllers of the window and a door.

S220. A first manager obtains the first input information through the first input source.

In this example, the manager may be a controller carried in an electronic control unit (ECU) on a vehicle. The controller includes an infotainment host; controllers of a vehicle body, a chassis and an engine; and automatic driving related controllers.

It should be noted that S210 and S220 may be implemented simultaneously, that is, the first input source transmits the input information to the first executor and the first manager at the same time; S210 and S220 may be implemented successively, that is, the first input source transmits the first input information to the first executor and then transmits the first input information to the first manager; and alternatively, the first input source transmits the first input information to the first manager and then transmits the first input information to the first executor.

S230. The first manager determines a first target execution instruction according to the first input information.

In this example, the step that the first manager determines a first target execution instruction according to the first input information may include: the first manager searches a table according to the first input information, and obtains the first target execution instruction corresponding to the first input information. The step that the first manager determines a first target execution instruction according to the first input information may further include: the first manager inputs the first input information into a target model, and obtains the first target execution instruction corresponding to the first input information.

S240. The first manager controls the first executor to execute the first target execution instruction.

S250. The first manager determines a first predicted execution result according to the first target execution instruction, and transmits the first predicted execution result to a second manager.

S260. The second manager transmits the first predicted execution result to a second executor, and causes the second executor to display the first predicted execution result.

Alternatively, after the step that the first manager controls the first executor to execute the first target execution instruction, the method further includes:
The first manager receives a first target execution result transmitted by the first executor and transmits the first target execution result to the second manager.

The second manager transmits the first target execution result to the second executor and causes the second executor to display the first target execution result under the condition that the first target execution result is different from the first predicted execution result.

Alternatively, after the step that the second manager transmits the first predicted execution result to a second executor, and causes the second executor to display the first predicted execution result, the method further includes:
The second executor is controlled to resume displaying an initial content under the condition that time for which the second executor displays the first predicted execution result is longer than a time threshold.

In this example, the time threshold may be set by the user or the system.

In this example, the initial content is a content displayed before the second executor displays the second predicted execution result.

In an example, a management system includes a first manager, a second manager, a first input source, a second input source, a first executor, a second executor, a third executor and a fourth executor. The first input source is connected to the first executor, the first input source is connected to the first manager, and the first manager is connected to the second manager. The second manager is connected to the second executor, and the second manager is connected to the second input source. The third executor is connected to the first manager, and the fourth executor is connected to the second manager. The first manager includes: a first input reception module, a first policy management module and a first execution module. The first input reception module is connected to the first input source, the first policy management module is connected to the first input reception module, and the first execution module is connected to the first policy management module. The second manager includes: a second input reception module, a second policy management module and a second execution module. The second input reception module is connected to the second input source, the second policy management module is connected to the second input reception module, and the second execution module is connected to the second policy management module. The first executor receives first input information corresponding to the first input source, and executes the first input information. The first manager obtains the first input information through the first input source. The first manager determines a first target execution instruction according to the first input information. The first manager controls the first executor to execute the first target execution instruction. The first manager determines a first predicted execution result according to the first target execution instruction, transmits the first predicted execution result to the third executor, causes the third executor to display the first predicted execution result, and transmits the first predicted execution result to the second manager. The second manager transmits the first predicted execution result to the second executor and the fourth executor, and causes the second executor and the fourth executor to display the first predicted execution result.

In this example, the first executor receives the first input information corresponding to the first input source, and executes the first input information. The first manager obtains the first input information through the first input source. The first manager determines the first target execution instruction according to the first input information. The first manager controls the first executor to execute the first target execution instruction. The first manager determines the first predicted execution result according to the first target execution instruction, and transmits the first predicted execution result to the second manager. The second manager transmits the first predicted execution result to the second executor, and causes the second executor to display the first predicted execution result, such that a conflict between control and display is solved, and the second executor can display a display result firstly without waiting for the execution result of the first executor.

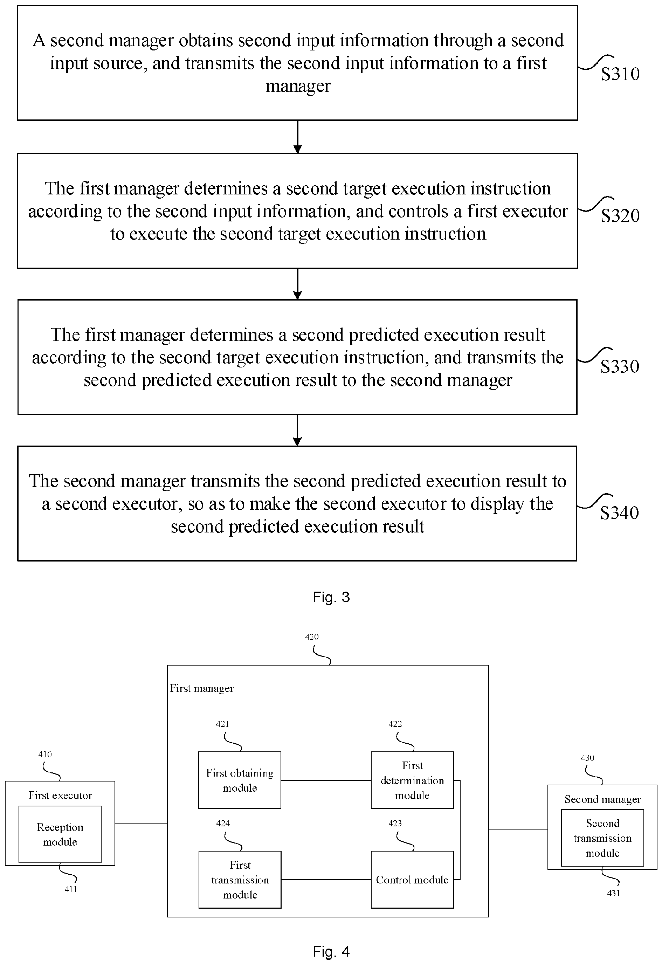

Fig. 3 is a flowchart of another management method according to an example of the disclosure.

This example may be applied to the case where a first executor, a second executor, a first input source and a second input source are managed. The method may be executed by the management apparatus according to the example of the disclosure. The apparatus may be implemented through software and/or hardware. As shown in Fig. 3, the method includes:
S310. A second manager obtains second input information through a second input source, and transmits the second input information to a first manager.

In this example, the second input information is input from the second input source. The second input source may be a variety of input devices including screen inputs, voice inputs and camera inputs of controllers of an infotainment system and an air conditioning system; hard buttons, buttons or smart surface buttons of a steering wheel, an air conditioner, a window, etc.; external connected devices: a mobile phone, a tablet computer, etc. connected to the infotainment system through USB or WIFL Bluetooth, a peripheral device connected to a whole vehicle through a whole vehicle network connection (CAN, network, Ethernet, etc.), other types of normal controllers, sensors, etc. connected through hard-wired I/O, and a cloud server, etc. connected to the whole vehicle through on-board Ethernet; and built-in applications: a whole vehicle controller that provides navigation and positioning information, and Cloud that transmits road information and other navigation information, weather information, smart city information, etc. transmitted to a local side.

In this example, the second input information includes at least one of the following: data input by a user and instructions input by the user through, for example, clicking a button of the air conditioner by the user.

S320. The first manager determines a second target execution instruction according to the second input information, and controls a first executor to execute the second target execution instruction.

S330. The first manager determines a second predicted execution result according to the second target execution instruction, and transmits the second predicted execution result to the second manager.

S340. The second manager transmits the second predicted execution result to a second executor, and causes the second executor to display the second predicted execution result.

Alternatively, after the step that the first manager controls a first executor to execute the second target execution instruction, the method further includes:
The first manager receives a second target execution result transmitted by the first executor and transmits the second target execution result to the second manager.

The second manager transmits the second target execution result to the second executor and causes the second executor to display the second target execution result under the condition that the second target execution result is different from the second predicted execution result.

Alternatively, after the step that the first manager determines a second predicted execution result according to the second target execution instruction, the second predicted execution result is transmitted to the second executor, and the second executor is caused to display the second predicted execution result, the method further includes:
The second executor is controlled to resume displaying an initial content under the condition that time for which the second executor displays the second predicted execution result is longer than a time threshold.

In this example, the time threshold may be set by the user or the system.

In this example, the initial content is a content displayed before the second executor displays the second predicted execution result.

In an example, a management system includes a first manager, a second manager, a first input source, a second input source, a first executor, a second executor, a third executor and a fourth executor. The first input source is connected to the first executor, the first input source is connected to the first manager, and the first manager is connected to the second manager. The second manager is connected to the second executor, and the second manager is connected to the second input source. The third executor is connected to the first manager, and the fourth executor is connected to the second manager. The first manager includes: a first input reception module, a first policy management module and a first execution module. The first input reception module is connected to the first input source, the first policy management module is connected to the first input reception module, and the first execution module is connected to the first policy management module. The second manager includes: a second input reception module, a second policy management module and a second execution module. The second input reception module is connected to the second input source, the second policy management module is connected to the second input reception module, and the second execution module is connected to the second policy management module. The second manager obtains second input information through the second input source, and transmits the second input information to the first manager. The first manager determines a second target execution instruction according to the second input information, and controls the first executor to execute the second target execution instruction. The first manager determines a second predicted execution result according to the second target execution instruction, transmits the second predicted execution result to the third executor, causes the third executor to display the second predicted execution result, and transmits the second predicted execution result to the second manager. The second manager transmits the second predicted execution result to the second executor and the fourth executor, and causes the second executor and the fourth executor to display the second predicted execution result.

In yet another example, the first manager directly transmits the control instruction through the first input source. Alternatively, the first input source transmits the control instruction to the first policy management module of the first manager, and then to the first executor for execution. In another input manner, the second input source transmits the control instruction, and the second policy management module transmits the control instruction to the first policy management module, and then to the first executor for execution. After the above two operations, when execution is started, the first policy management module may predict an execution result, transmit the execution result to the third execution module and the second policy management module first, and display the execution result on the third executor and the fourth executor. After the first executor completes execution, the execution result is transmitted to the first policy management module, the first policy management module determines whether the execution result is the same as the predicted execution result, and if not, the execution result is transmitted to the third executor and the fourth executor through the third execution module.

It should be noted that a policy is executed according to the following principle: an executor responsible for a policy management module make decisions on the execution result and the predicted execution result, and other distributed policy management modules do not execute the policy as synchronous management services.

In this example, the second manager obtains the second input information through the second input source, and transmits the second input information to the first manager. The first manager determines the second target execution instruction according to the second input information, and controls the first executor to execute the second target execution instruction. The first manager determines the second predicted execution result according to the second target execution instruction, and transmits the second predicted execution result to the second executor. The second manager transmits the second predicted execution result to the second executor, and causes the second executor to display the second predicted execution result, such that a conflict between control and display is solved, and the second executor can display a display result firstly without waiting for the execution result of the first executor.

Fig. 4 is a schematic structural diagram of a management apparatus according to an example of the disclosure. This example may be applied to the case where a first executor, a second executor, a first input source and a second input source are managed. The apparatus may be implemented through software and/or hardware. The apparatus may be integrated in any device providing management functions. As shown in Fig. 4, the management apparatus may includes: a first executor 410, a first manager 420 and a second manager 430.

In this example, the first executor 410 includes: a reception module 411 configured to receive first input information corresponding to a first input source, and execute the first input information.

The first manager 420 includes: a first obtaining module 421, a first determination module 422, a control module 423 and a first transmission module 424.

The first obtaining module 421 is configured to obtain the first input information through the first input source.

The first determination module 422 is configured to determine a first target execution instruction according to the first input information.

The control module 423 is configured to control the first executor to execute the first target execution instruction.

The first transmission module 424 is configured to determine a first predicted execution result according to the first target execution instruction, and transmit the first predicted execution result to the second manager.

The second manager 430 includes: a second transmission module 431 configured to transmit the first predicted execution result to a second executor, and causes the second executor to display the first predicted execution result.

The product may execute the method according to any example of the disclosure, and has corresponding function modules and beneficial effects for executing the method.

In this example, the first executor receives the first input information corresponding to the first input source, and executes the first input information. The first manager obtains the first input information through the first input source. The first manager determines the first target execution instruction according to the first input information. The first manager controls the first executor to execute the first target execution instruction. The first manager determines the first predicted execution result according to the first target execution instruction, and transmits the first predicted execution result to the second manager. The second manager transmits the first predicted execution result to the second executor, and causes the second executor to display the first predicted execution result, such that a conflict between control and display is solved, and the second executor can display a display result firstly without waiting for the execution result of the first executor.

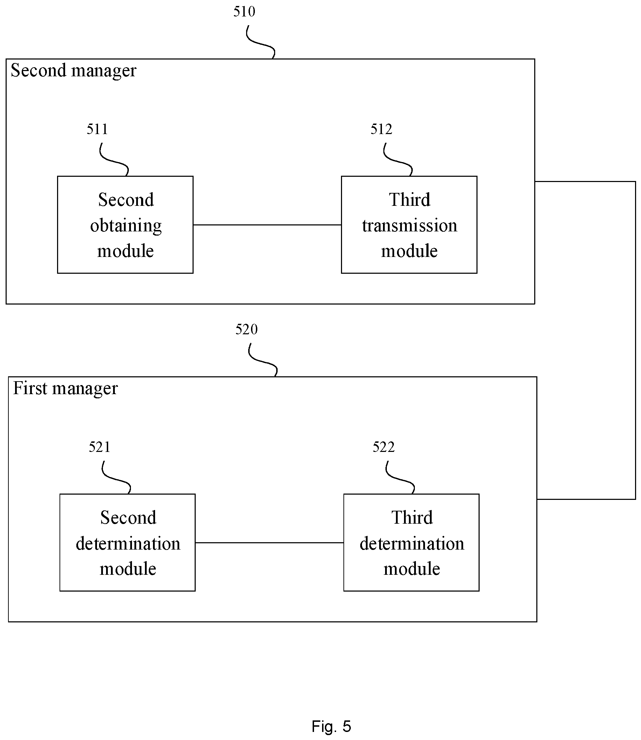

Fig. 5 is a schematic structural diagram of another management apparatus according to an example of the disclosure. This example may be applied to the case where a first executor, a second executor, a first input source and a second input source are managed. The apparatus may be implemented through software and/or hardware. The apparatus may be integrated in any device providing management functions. As shown in Fig. 5, the management apparatus includes: a second manager 510 and a first manager 520.

In this example, the second manager 510 includes: a second obtaining module 511 and a third transmission module 512.

The second obtaining module 511 is configured to obtain second input information through a second input source, and transmit the second input information to the first manager.

The third transmission module 512 is configured to transmit a second predicted execution result to a second executor, and cause the second executor to display the second predicted execution result.

The first manager 520 includes: a second determination module 521 and a third determination module 522.

The second determination module 521 is configured to determine a second target execution instruction according to the second input information, and control a first executor to execute the second target execution instruction.

The third determination module 522 is configured to determine the second predicted execution result according to the second target execution instruction, and transmit the second predicted execution result to the second manager.

The product may execute the method according to any example of the disclosure, and has corresponding function modules and beneficial effects for executing the method.

In this example, the second manager obtains the second input information through the second input source, and transmits the second input information to the first manager. The first manager determines the second target execution instruction according to the second input information, and controls the first executor to execute the second target execution instruction. The first manager determines the second predicted execution result according to the second target execution instruction, and transmits the second predicted execution result to the second executor. The second manager transmits the second predicted execution result to the second executor, and causes the second executor to display the second predicted execution result, such that a conflict between control and display is solved, and the second executor can display a display result firstly without waiting for the execution result of the first executor.

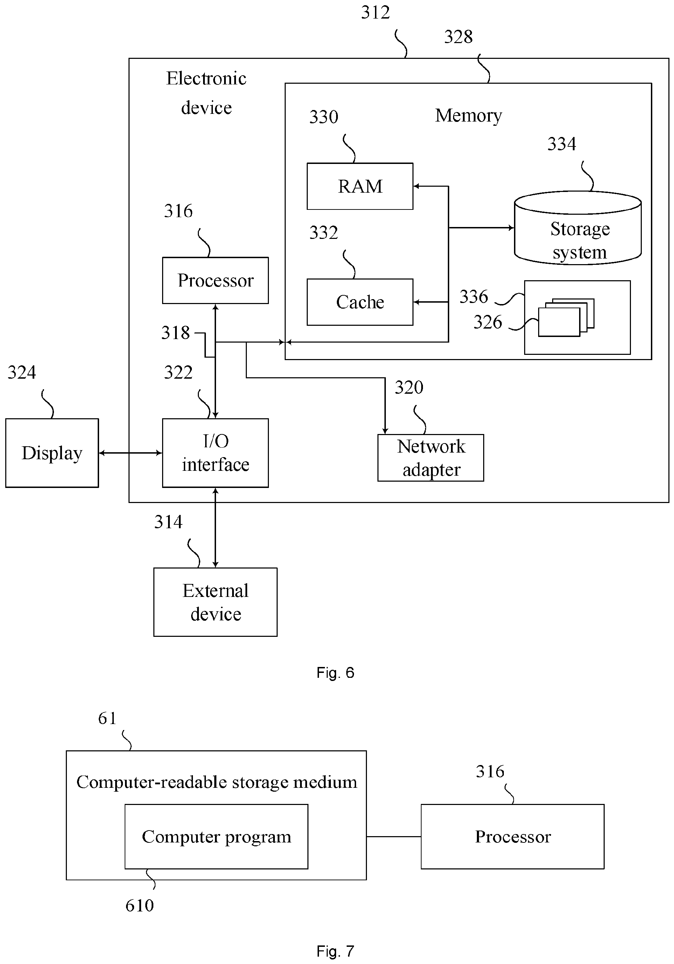

Fig. 6 is a schematic structural diagram of an electronic device according to Example 3 of the disclosure. Fig. 6 shows a block diagram of the electronic device 312 for implementing an embodiment of the disclosure. The electronic device 312 shown in Fig. 6 is merely one instance. The device 312 is a computer device with a typical track fitting function.

As shown in Fig. 6, the electronic device 312 is in the form of a general-purpose computer device. The electronic device 312 may include assemblies as follows: one or more processors 316, a storage apparatus 328, and a bus 318 connecting different system assemblies (including the storage apparatus 328 and the processor 316).

The bus 318 represents one or more of several kinds of bus structures, and includes a memory bus or a peripheral bus of a memory controller, a local bus for an accelerated graphics port and a processor, or a local bus using any bus structure of various kinds of bus structures. For example, these architectures include an industry standard architecture (ISA) bus, a micro channel architecture (MCA) bus, an enhanced ISA bus, a video electronics standards association (VESA) local bus and a peripheral component interconnect (PCI) bus.

The electronic device 312 typically includes various kinds of computer system readable media. These media may be any available medium that may be accessed by the electronic device 312, and include volatile and nonvolatile media, and removable and non-removable media.

The storage apparatus 328 may include a computer system readable medium in the form of a volatile memory, such as a random access memory (RAM) 330 and/or a cache memory 332. The electronic device 312 may include other removable/non-removable, and volatile/nonvolatile computer system storage media. As an example merely, the storage system 334 may be used to read from and write to non-removable and nonvolatile magnetic media (commonly referred to as a "hard disk drive"), and may provide a disk drive for reading from and writing to removable and nonvolatile magnetic disks (such as a "floppy disk"), and an optical disk drive for reading from and writing to removable and nonvolatile optical disks (for example, a compact disc-read only memory (CD-ROM), a digital video disc-read only memory (DVD-ROM) or other optical media). In these cases, each drive may be connected to the bus 318 through one or more data medium interfaces. The storage apparatus 328 may include at least one program product, the program product has a set of (for example, at least one) program modules, and these program modules are configured to execute functions of various examples of the disclosure.

A program 336 with a set of (at least one) program modules 326 may be stored in, for example, the storage apparatus 328. Such program modules 326 include an operation system, one or more application programs, other program modules and program data, and each or a combination of these examples may include implementation of a network environment. The program module 326 generally executes functions and/or methods in the examples of the disclosure.

The electronic device 312 may also communicate with one or more external devices 314 (for example, a keyboard, a pointing device, a camera, a display 324, etc.), one or more devices that make users interact with the electronic device 312, and/or any device that makes the electronic device 312 communicate with one or more other computer devices (for example, a network card, a modem, etc.). This communication may be performed through an input/output (I/O) interface 322. Further, the electronic device 312 may also communicate with one or more networks (for example, a local area network (LAN), a wide area network (WAN) and/or a public networks, for example the Internet) through a network adapter 320. As shown in the figures, the network adapter 320 communicates with other modules of the electronic device 312 through the bus 318. It should be understood that other hardware and/or software modules may be used in conjunction with the electronic device 312, and include: microcodes, device drives, redundant processing units, external disk drive arrays, redundant arrays of independent disks (RAID) systems, tape drives, data backup storage systems, etc.

The processor 316 runs a program stored in the storage apparatus 328, and then executes various functional applications and data processing, for example, implements the management method according to the above example of the disclosure:
A first executor receives first input information corresponding to a first input source and executes the first input information.

A first manager obtains the first input information through the first input source.

The first manager determines a first target execution instruction according to the first input information.

The first manager controls the first executor to execute the first target execution instruction.

The first manager determines a first predicted execution result according to the first target execution instruction and transmits the first predicted execution result to a second manager.

The second manager transmits the first predicted execution result to a second executor and causes the second executor to display the first predicted execution result.

Alternatively, for example, the management method according to the example of the disclosure is implemented as follows:
A second manager obtains second input information through a second input source and transmits the second input information to a first manager.

The first manager determines a second target execution instruction according to the second input information and controls a first executor to execute the second target execution instruction.

The first manager determines a second predicted execution result according to the second target execution instruction and transmits the second predicted execution result to the second manager.

The second manager transmits the second predicted execution result to a second executor and causes the second executor to display the second predicted execution result.

Fig. 7 is a schematic structural diagram of a computer-readable storage medium including a computer program according to an example of the disclosure. The example of the disclosure provides a computer-readable storage medium 61 storing a computer program 610, and the program implements the management method according to the example of the disclosure when executed by one or more processors:
A first executor receives first input information corresponding to a first input source and executes the first input information.

A first manager obtains the first input information through the first input source.

The first manager determines a first target execution instruction according to the first input information.

The first manager controls the first executor to execute the first target execution instruction.

The first manager determines a first predicted execution result according to the first target execution instruction and transmits the first predicted execution result to a second manager.

The second manager transmits the first predicted execution result to a second executor and causes the second executor to display the first predicted execution result.

Alternatively, for example, the management method according to the example of the disclosure is implemented as follows:
A second manager obtains second input information through a second input source and transmits the second input information to a first manager.

The first manager determines a second target execution instruction according to the second input information and controls a first executor to execute the second target execution instruction.

The first manager determines a second predicted execution result according to the second target execution instruction and transmits the second predicted execution result to the second manager.

The second manager transmits the second predicted execution result to a second executor and causes the second executor to display the second predicted execution result.

Any combination of one or more computer-readable media may be adopted. The computer-readable medium may be a computer-readable signal medium or a computer-readable storage medium or any one of their combinations. The computer-readable storage medium may be, for example, an electric, magnetic, optical, electromagnetic, infrared, or semiconductor system, apparatus or device, or any one of their combinations. The computer-readable storage medium includes: an electrical connection with one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any one of their suitable combinations. In the description, the computer-readable storage medium may be any tangible medium including or storing a program, and the program may be used by or in combination with an instruction execution system, apparatus or device.

The computer-readable signal medium may include a data signal propagated in a baseband or as part of a carrier wave, in which a computer-readable program code is carried. This propagated data signal may have many forms, including but not limited to an electromagnetic signal, an optical signal or any one of their suitable combinations. The computer-readable signal medium may further be any computer-readable medium other than the computer-readable storage medium, and the computer-readable medium may send, propagate or transmit a program used by or in combination with the instruction execution system, apparatus or device.

A program code included in the computer-readable medium may be transmitted by any suitable medium, including but not limited to: a wireless, wire, optical cable, radio frequency (RF) medium, etc., or any one of their suitable combinations.

In some embodiments, a client side and a server may communicate by using any currently known or future developed network protocol such as the hyper text transfer protocol (HTTP), and may be interconnected with digital data communication in any form or medium (for example, a communication network). Instances of the communication network include LAN, WAN, internet work (for example, the Internet), an end-to-end network (for example, adhoc end-to-end network), and any currently known or future developed network.

The computer-readable medium may be included in the electronic device, or exist independently without being fitted into the electronic device.

Computer program codes for executing the operations of the disclosure may be written in one or more programming languages or their combinations, and the programming languages include object-oriented programming languages such as Java, Smalltalk. C++, and further include conventional procedural programming languages such as "C" language or similar programming languages. The program codes may be completely executed on a computer of the user, partially executed on the computer of the user, executed as an independent software package, partially executed on the computer of the user and a remote computer, or completely executed on the remote computer or a server. In the case of involving the remote computer, the remote computer may be connected to the computer of the user through any kind of network, including a LAN or WAN, or may be connected to an external computer (for example, through the Internet provided by an Internet service provider).

The flowcharts and block diagrams in the accompanying drawings illustrate the architectures, functions and operations that may be implemented by the systems, the methods and the computer program products according to various examples of the disclosure. In this regard, each block in the flowchart or block diagram may represent a module, a program segment, or a part of a code that includes one or more executable instructions for implementing specified logical functions. It should also be noted that in some alternative implementations, the functions noted in the blocks may occur in an order different than those noted in the accompanying drawings. For example, two blocks represented in succession may actually be executed in substantially parallel, and may sometimes be executed in an reverse order depending on the functions involved. It should also be noted that each block in the block diagram and/or flowchart, and a combination of blocks in the block diagram and/or flowchart may be implemented by a specific hardware-based system that executes specified functions or operations, or may be implemented by a combination of specific hardware and computer instructions.

The units involved in the example of the disclosure may be implemented by software or hardware.

The functions described above herein may be executed at least in part by one or more hardware logic components. For example, usable hardware logic components of exemplary types include an field programmable gate array (FPGA), an application specific integrated circuit (ASIC), an application specific standard parts (ASSP), a system on chip (SOC), a complex programmable logic device (CPLD), etc.

In the context of the disclosure, a machine-readable medium may be a tangible medium, and may include or store a program that is used by or used in combination with the instruction execution system, apparatus or device. The machine-readable medium may be a machine-readable signal medium or a machine-readable storage medium. The machine-readable storage medium may include an electric, magnetic, optical, electromagnetic, infrared, or semiconductor system, apparatus or device, or any one of their combinations. The machine-readable storage medium includes an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any one of their suitable combinations.

## Claims

1. A management system, comprising: a first manager, a second manager, a first input source, a second input source, a first executor and a second executor, wherein the first input source is connected to the first executor, the first input source is connected to the first manager, the first manager is connected to the second manager, the second manager is connected to the second executor, and the second manager is connected to the second input source.

2. A management method, applied to the management system according to claim 1, and comprising:
receiving first input information corresponding to a first input source and executing the first input information by a first executor;
obtaining the first input information by a first manager through the first input source;
determining a first target execution instruction by the first manager according to the first input information;
controlling, by the first manager, the first executor to execute the first target execution instruction;
determining a first predicted execution result according to the first target execution instruction and transmitting the first predicted execution result to a second manager by the first manager; and
transmitting the first predicted execution result to a second executor and causing the second executor to display the first predicted execution result by the second manager.

3. The method according to claim 2, wherein after the controlling, by the first manager, the first executor to execute the first target execution instruction, the method further comprises:
receiving a first target execution result transmitted by the first executor and transmitting the first target execution result to the second manager by the first manager; and
transmitting the first target execution result to the second executor and causing the second executor to display the first target execution result by the second manager under the condition that the first target execution result is different from the first predicted execution result.

4. A management method, applied to the management system according to claim 1, and comprising:
obtaining second input information through a second input source and transmitting the second input information to a first manager by a second manager;
determining a second target execution instruction according to the second input information and controlling a first executor to execute the second target execution instruction by the first manager;
determining a second predicted execution result according to the second target execution instruction and transmitting the second predicted execution result to the second manager by the first manager; and
transmitting the second predicted execution result to a second executor and causing the second executor to display the second predicted execution result by the second manager.

5. The method according to claim 4, wherein after the controlling a first executor to execute the second target execution instruction by the first manager, the method further comprises:
receiving a second target execution result transmitted by the first executor and transmitting the second target execution result to the second manager by the first manager; and
transmitting the second target execution result to the second executor and causing the second executor to display the second target execution result by the second manager under the condition that the second target execution result is different from the second predicted execution result.

6. The method according to claim 4, wherein after the determining a second predicted execution result according to the second target execution instruction by the first manager, transmitting the second predicted execution result to the second executor, and causing the second executor to display the second predicted execution result, the method further comprises:
controlling the second executor to resume displaying an initial content under the condition that time for which the second executor displays the second predicted execution result is longer than a time threshold.

7. A management apparatus, comprising: a first executor, a first manager and a second manager; wherein
the first executor comprises: a reception module configured to receive first input information corresponding to a first input source, and execute the first input information;
the first manager comprises: a first obtaining module, a first determination module, a control module and a first transmission module; wherein
the first obtaining module is configured to obtain the first input information through the first input source;
the first determination module is configured to determine a first target execution instruction according to the first input information; the control module is configured to control the first executor to execute the first target execution instruction; and
the first transmission module is configured to determine a first predicted execution result according to the first target execution instruction, and transmit the first predicted execution result to the second manager; and
the second manager comprises: a second transmission module configured to transmit the first predicted execution result to a second executor, and causes the second executor to display the first predicted execution result.

8. A management apparatus, comprising: a second manager and a first manager, wherein
the second manager comprises: a second obtaining module and a third transmission module; wherein
the second obtaining module is configured to obtain second input information through a second input source, and transmit the second input information to the first manager; and
the third transmission module is configured to transmit a second predicted execution result to a second executor, and cause the second executor to display the second predicted execution result; and
the first manager comprises: a second determination module and a third determination module; wherein
the second determination module is configured to determine a second target execution instruction according to the second input information, and control a first executor to execute the second target execution instruction; and
the third determination module is configured to determine the second predicted execution result according to the second target execution instruction, and transmit the second predicted execution result to the second manager.

9. An electronic device, comprising:
a processor; and
a memory configured to store a program; wherein
the processor implements the management method according to any one of claims 2-6 when the program is executed by the processor.

10. A computer-readable storage medium, storing a computer program, wherein the computer program implements the management method according to any one of claims 2-6 when executed by a processor.
